# EUROPEAN PATENT SPECIFICATION

(11) **EP 3 398 690 B1**
(45) Date of publication and mention of the grant of the patent: **26.02.2020**
(21) Application number: 17169422.7
(22) Date of filing: 04.05.2017
(51) Int. Cl.: B05B 14/20, B05B 14/43, C08J 11/00

(54) **NITROGEN ENRICHED WATER BASED PAINT RECYCLING AND REUSING SYSTEM AND METHOD**
RECYCLING VON STICKSTOFFANGEREICHERTEM WÄSSRIGEM ANSTRICHMITTEL UND WIEDERVERWENDUNGSSYSTEM UND -VERFAHREN
SYSTÈME ET PROCÉDÉ DE RECYCLAGE ET DE RÉUTILISATION DE PEINTURE À BASE D'EAU ENRICHIE EN AZOTE

(43) Date of publication of application: 07.11.2018
(73) Proprietor: Vestel Elektronik Sanayi ve Ticaret A.S., 45030 Manisa (TR)
(72) Inventor: GÖKÇE KUYUCU, Ömer, 45030 Manisa (TR); AYDOGAN, Önder, 45030 Manisa (TR)
(74) Representative: Ascherl, Andreas

(56) References cited:
- GB-A- 1 220 265
- US-A- 4 390 126
- US-A- 5 873 945

## Description

This invention refers to a system for recycling and reusing of water based paint using Nitrogen according to claim 1 and a method thereof according to claim 10.

### Background of the Invention

Systems that utilize spray wet painting have only 50% of efficiency as maximum. Remaining 50% is wasted during the painting process and referred as overspray paint. The overspray paint can be recovered using different techniques. But the recovery is not enough to make this overspray paint to reuse it again. To completely make use of the recovery paint, there is a need for a system that requires many stages of filtration, dozing additives and viscosity control. In such system, however the most important problem is to prevent paint reaction and dozing sequence until completion of the entire process. Hence, once the paint sprayed, the sprayed paint can start to react with oxygen gas and polymerization step can begin. So there is a need for system to maintain the stability of the recovery paint until completion of the process that includes but is not limited to filtering, adding additives and so on.

Prior art document US4390126A discloses a process for supplying painting lines with paint. The prior art describes that there is stress due to the drift current in the paint supply equipment. Further, the prior art states that this stress prevents some paint materials from staying stable. One of the solutions is the introduction of a pressurized container, a pressurizing gas, and a pump to deliver paint to the pressurized container. However, the document does not include a system for recycling of the paint and maintaining stability for filtering process and is not intended as well.

Another prior art document US5873945A relates to a process and system for recovering quantities of carbonyl compound material from solvent emulsions in water, which are derived from overspray painting. The prior art US5873945A does not describe the problem of the dye that is undergoing oxidation reaction. To control the oxidation reaction a system is required to maintain the stability of the recovery paint until completion of the recycling process.

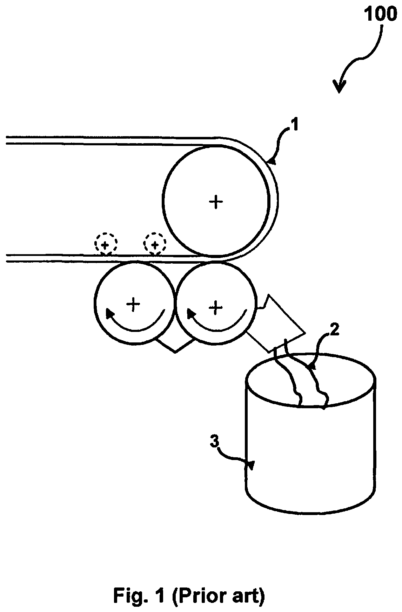

Another prior art document US6533102B2 relates to a device for cleaning a conveyor belt. The Device for cleaning a conveyor belt 1is illustrated in Figure.1 has a conveyor belt 1 that runs around a roller and includes an upper active branch and a lower return branch. The device is used to remove substances deposited on the conveyor belt 1 comprising of a vessel containing, a solvent for the substances and a distributing means to distribute the solvent onto a portion of a return branch of the conveyor to soften the substances deposited on the conveyor. The device further includes a first scraping unit and a second scraping unit in succession along with the return branch for scraping and cleaning the return branch to remove the substances with the solvent for subsequent recovery and removal. An enclosing means for enclosing, in a closed environment which is isolated from an external environment, the portion of the return branch of the conveyor and associated parts of said first and second units in contact with the solvent, in order to prevent or limit evaporation and dispersion of the solvent in the external environment.

According to the prior art US6533102B2, the first and the second scraping units of the return branch of the conveyor comprise respective first and second cylinders which are parallel to the return path of the conveyor. The first cylinder rolles in a direction that is opposite to the roller. Further, the peripheries of the first and second cylinders rotate in an opposite direction to that of the return branch of the conveyor and touch the return branch to remove substances therefrom. A scraper blade is provided to scrape removed substances from the first cleaning cylinder which were scraped from the return branch and to transfer the removed substances by gravity into a recovery and removal trough. The peripheries of said first and second cylinders are positioned close to each other. A space between the first and second cylinders is closed upwardly by the return branch of the conveyor, is closed downwardly, and is closed laterally by walls which form a seal with said first and second cylinders and which walls are arranged so that the walls essentially form an enclosure with the return branch of the conveyor such that said space forms said vessel which is thus isolated from the external environment and into which the solvent required for the process of cleaning the conveyor is made to flow.

The subject-matter of US4390126A, US5873945A, US5873945A does not provide a system for recycling and reusing of water based paint using Nitrogen.

### Object of the Invention

It is therefore the object of the present invention to provide a system, in particular a system for recycling and reusing of water based paint using Nitrogen, and a method that has a higher level of stability compared to the known systems and methods.

### Description of the Invention

The before mentioned object is solved by a system for recycling and reusing of water based paint using Nitrogen according to claim 1. The system for recycling and reusing of water based paint using Nitrogen according to the present invention preferably comprises, a recovery tank, a flat belt recovery system, a low pressure tank, a paint pump and a Nitrogen generator. The recovery tank is provided for recovering overspray paint from the flat belt recovery system. The flat belt recovery system can be configured to remove and recover overspray paint from a conveyor belt to the recovery tank. The low pressure tank is provided to collect the overspray paint through the paint pump from the recovery tank. The Nitrogen generator is provided for supplying Nitrogen gas to the low pressure tank in order to prevent water based paint reaction with atmospheric oxygen. The Nitrogen generator comprises of a Nitrogen flow valve for transferring Nitrogen gas from the Nitrogen generator to the low pressure tank. The low pressure tank comprises of an outlet valve, a Nitrogen opening valve and a pressure sensor. The outlet valve is provided for balancing pressure level in the low pressure tank. Further, the outlet valve includes a membrane for allowing oxygen gas to move faster than Nitrogen gas from the low pressure tank.

This solution is beneficial since the system can enrich Nitrogen inside the low pressure tank to make the recovery paint ready for recycling by adding additives and by filtering.

Further preferred embodiments are subject-matter of dependent claims and/or of the following specification parts.

According to a preferred embodiment of the present invention, the pressure sensor is provided in the low pressure tank for controlling pressure level of the outlet valve and a Nitrogen opening valve. The Nitrogen gas present inside the low pressure tank can prevent reaction between atmospheric oxygen and the water based paint. The paint pump is provided to transfer recovery paint from the recovery tank to the low pressure tank with a predetermined pressure level. Further, the paint pump can also transfer the recovery paint from bottom of the recovery tank.

According to a further preferred embodiment of the present invention, when the recovery paint is started to be pumped to the low pressure tank, the Nitrogen generator can start to transfer Nitrogen gas to the low pressure tank. Further, the Nitrogen generator may stop supplying Nitrogen gas when a predetermined pressure level is achieved. Subsequently, the outlet valve is opened to balance the pressure level when the Nitrogen gas is transferred to the low pressure tank.

According to a further preferred embodiment of the present invention, the membrane comprises of thin-hair hollow tubes made of polymeric material. The pressure in the low pressure tank can make the air that is present inside the low pressure tank to move outside. Further, the air that is present inside the low pressure tank includes but is not limited to Oxygen, Nitrogen and so on. Further, the membrane can allow the Oxygen gas to pass through the membrane faster than the Nitrogen gas.

The before mentioned object is also solved by a method for recycling and reusing of water based paint using Nitrogen according to claim 10. Said method preferably comprising the steps of: collecting overspray paint in a recovery tank, transferring recovery paint to a low pressure tank to prevent reaction with atmospheric oxygen, transferring Nitrogen gas to the low pressure tank to mix it with the recovery paint, allowing Oxygen gas that is present inside the low pressure tank to move out to atmosphere forcibly through a membrane, increasing Nitrogen gas concentration by transferring Oxygen gas to the atmosphere and passing Nitrogen gas inside the low pressure tank, maintaining a predetermined pressure level inside the low pressure tank, keeping Nitrogen gas at higher level of concentration continuously inside the low pressure tank to prevent recovery paint reaction with oxygen, and recycling the recovery paint by adding additives and by filtering.

Further benefits, goals and features of the present invention will be described by the following specification of the attached figures, in which components of the invention are exemplarily illustrated. Components of the devices and method according to the inventions, which match at least essentially with respect to their function, can be marked with the same reference sign, wherein such components do not have to be marked or described in all figures.

The invention is just exemplarily described with respect to the attached figures in the following.

### Brief Description of the Drawings

- Fig. 1: illustrates the flat belt recovery system according to the prior art; and
- Fig. 2: illustrates the system for recycling and reusing of water based paint using Nitrogen according to the preferred embodiment of the present invention.

Fig. 1 illustrates the flat belt recovery system 100 according to the prior art. According to the prior art, the flat belt recovery system 100 comprises of a recovery tank 3 for recovering overspray paint 2 from the flat belt recovery system 100. The flat belt recovery system 100 can be configured to remove overspray paint 2 from a conveyor belt 1 and recover it to the recovery tank 3.

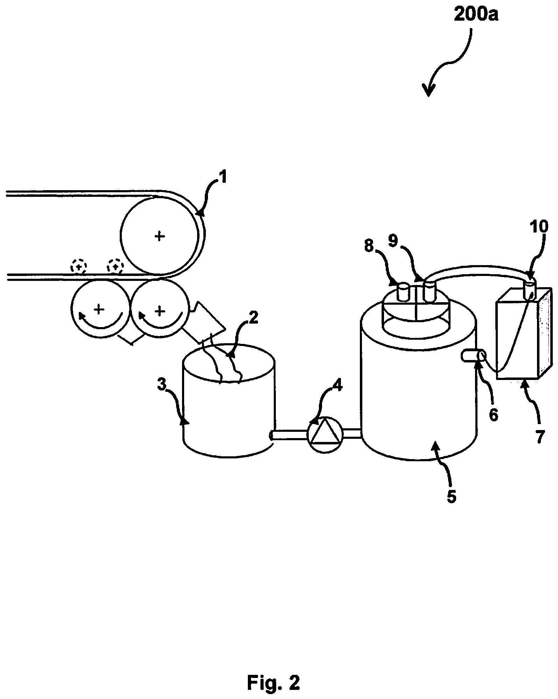

Fig. 2 illustrates the system 200 for recycling and reusing of water based paint using Nitrogen according to the preferred embodiment of the present invention. The system utilizes Nitrogen to stop reaction between oxygen and water based paint. Hence, the recovered paint can be treated with Nitrogen instead of oxygen to maintain the stability of the recovery paint 2 until completion of the process that includes but is not limited to filtering, adding additives and so on. In addition to that, the differences between O2 (oxygen molecule) and N2 (nitrogen molecule) is the bonding. O2 has a double bond and N2 is a triple bond (these are both covalent bonds). This means that the bond in N2 is stronger than in 02. Which makes sense as we know that N2 is a highly stable (unreactive gas or inert gas) whereas 02 is much more reactive.

According to a preferred embodiment, the system for recycling and reusing of water based paint using Nitrogen according to the present invention preferably comprises, a recovery tank 3, a flat belt recovery system 100, a low pressure tank 5, a paint pump 4 and a Nitrogen generator 7. The recovery tank 3 is provided for recovering overspray paint 2 from the flat belt recovery system 100. The low pressure tank 5 is provided to collect the overspray paint 2 through the paint pump 4 from the recovery tank 3.

According to a preferred embodiment, the Nitrogen generator 7 is provided for supplying Nitrogen gas to the low pressure tank 5 in order to prevent water based paint reaction with atmospheric oxygen. The Nitrogen generator 7 comprises of a Nitrogen flow valve 10 for transferring Nitrogen gas from the Nitrogen generator 7 to the low pressure tank 5. The low pressure tank 5 comprises of an outlet valve 8, a Nitrogen opening valve 9 and a pressure sensor 6. The outlet valve 8 is provided for balancing pressure level in the low pressure tank 5. Further, the outlet valve 8 includes a membrane for allowing oxygen gas to move faster than Nitrogen gas from the low pressure tank 5.

According to a preferred embodiment of the present invention, the pressure sensor 6 is provided in the low pressure tank 5 for controlling pressure level of the outlet valve 8 and a Nitrogen opening valve 9. The Nitrogen gas present inside the low pressure tank 5 can prevent reaction between atmospheric oxygen and the water based paint. The paint pump 4 is provided to transfer recovery paint 2 from the recovery tank 3 to the low pressure tank 5 with a predetermined pressure level. Further, the paint pump 4 can also transfer the recovery paint 2 from bottom of the recovery tank 3.

According to a further preferred embodiment of the present invention, when the recovery paint 2 is started to pump the recovery paint 2 to the low pressure tank 5, the Nitrogen generator 7 can start to transfer Nitrogen gas to the low pressure tank 5.

Further, the Nitrogen generator 7 may stop supplying Nitrogen gas when a predetermined pressure level is achieved. Subsequently, the outlet valve 8 is opened to balance the pressure level when the Nitrogen gas is transferred to the low pressure tank 5.

According to a further preferred embodiment of the present invention, the membrane comprises of thin-hair hollow tubes made of polymeric material. The pressure in the low pressure tank 5 can make the air that is present inside the low pressure tank 5 to move outside. Further, the air that is present inside the low pressure tank 5 includes but is not limited to Oxygen, Nitrogen and so on. Further, the membrane can allow the Oxygen gas to pass through the membrane faster than the Nitrogen gas. That is the air passing through the tubes of the membrane gradually becomes poorer in oxygen and richer in nitrogen. So the system can control nitrogen level continuously to be at the higher level of concentrated inside the low pressure tank 5. This continues until the low pressure tank 5 is full. The recovery paint 2 is now ready to recycle 100% by adding additives and by filtering.

According to a further preferred embodiment of the present invention, a method for recycling and reusing of water based paint using Nitrogen preferably comprising the steps of: collecting overspray paint 2 in a recovery tank 3, transferring the recovery paint 2 to a low pressure tank 5 to prevent reaction with atmospheric oxygen, transferring Nitrogen gas to the low pressure tank 5 to mix it with the recovery paint 2, allowing Oxygen gas that is present inside the low pressure tank 5 to move out to atmosphere forcibly through a membrane, increasing Nitrogen gas concentration by transferring Oxygen gas to the atmosphere and passing Nitrogen gas inside the low pressure tank 5, maintaining a predetermined pressure level inside the low pressure tank 5, keeping Nitrogen gas at higher level of concentration continuously inside the low pressure tank 5 to prevent recovery paint 2 reaction with oxygen, and recycling the recovery paint 2 by adding additives and by filtering.

### List of reference numbers

- 1: a conveyor belt
- 2: recovery overspray paint or recovery paint
- 3: a recovery tank
- 4: a paint pump
- 5: a low pressure tank
- 6: a pressure sensor
- 7: a Nitrogen generator
- 8: an outlet valve
- 9: Nitrogen opening valve
- 10: Nitrogen flow valve
- 100: a flat belt recovery system
- 200: a system for recycling and reusing of water based paint using Nitrogen

## Claims

1. A system for recycling and reusing of water based paint using Nitrogen comprises of,
a recovery tank (3) is provided for recovering overspray paint (2) from a flat belt recovery system (100);
wherein the flat belt recovery system (100) configured to remove and recover overspray paint (2) from a conveyor belt (1) to the recovery tank (3);
a low pressure tank (5) is provided to collect the overspray paint (2) through a paint pump (4) from the recovery tank (3);
**characterized in that**
a Nitrogen generator (7) is provided for supplying Nitrogen gas to the low pressure tank (5) in order to prevent water based paint reaction with atmospheric oxygen;
wherein the Nitrogen gas is transferred from the Nitrogen generator (7) to the low pressure tank (5) through a Nitrogen flow valve (10);
an outlet valve (8) is provided for balancing pressure level in the low pressure tank (5);
a membrane is provided in the outlet valve (8) to allow oxygen gas to move faster than Nitrogen gas from the low pressure tank (5); and
thereby enriching Nitrogen inside the low pressure tank (5) to make the recovery paint (2) ready for recycling by adding additives and by filtering.

2. The system of claim 1, wherein the system further comprises of a pressure sensor (6) for controlling pressure level of the outlet valve (8) and a Nitrogen opening valve (9) that is provided in the low pressure tank (5).

3. The system of claim 1, wherein the Nitrogen gas present inside the low pressure tank (5) prevents reaction between atmospheric oxygen and the water based paint.

4. The system of claim 1, wherein the paint pump (4) transfers recovery paint (2) from the recovery tank (3) to the low pressure tank (5) with a predetermined pressure level; and wherein the paint pump (4) transfers the recovery paint (2) from bottom of the recovery tank (3).

5. The system of claim 1, wherein the Nitrogen generator (7) starts to transfer Nitrogen gas to the low pressure tank (5) when the recovery paint (2) is started to pump the recovery paint (2) to the low pressure tank (5); and wherein the Nitrogen generator (7) stops supplying Nitrogen gas when a predetermined pressure level is achieved.

6. The system of claim 1, wherein the outlet valve (8) is opened to balance the pressure level when the Nitrogen gas is transferred to the low pressure tank (5).

7. The system of claim 1, wherein the membrane comprises of thin-hair hollow tubes made of polymeric material.

8. The system of claim 1, wherein the pressure in the low pressure tank (5) makes air that is present inside the low pressure tank (5) to move outside; and wherein the air that is present inside the low pressure tank (5) includes oxygen and Nitrogen.

9. The system of claim 1, wherein the membrane allows the Oxygen gas to pass through the membrane faster than the Nitrogen gas.

10. A method for recycling and reusing of water based paint comprising the steps of,
collecting overspray paint (2) in a recovery tank (3);
transferring recovery paint (2) to a low pressure tank (5) to prevent reaction with atmospheric oxygen;
transferring Nitrogen gas to the low pressure tank (5) to mix it with the recovery paint (2);
allowing Oxygen gas that is present inside the low pressure tank (5) to move out to atmosphere forcibly through a membrane;
increasing Nitrogen gas concentration by transferring Oxygen gas to the atmosphere and passing Nitrogen gas inside the low pressure tank (5); maintaining a predetermined pressure level inside the low pressure tank (5); keeping Nitrogen gas at higher level of concentration continuously inside the low pressure tank (5) to prevent recovery paint (2) reaction with oxygen; and recycling the recovery paint (2) by adding additives and by filtering.

## Patentansprüche

1. System zum Recycling und zur Wiederverwendung von wasserbasiertem Lack unter Verwendung von Stickstoff, umfassend,
ein Rückgewinnungstank (3) zum Rückgewinnen von Overspray-Farbe (2) aus einem Flachbandrückgewinnungssystem (100) vorgesehen ist;
wobei das Flachband-Rückgewinnungssystem (100) konfiguriert ist, um Übersprühfarbe (2) von einem Förderband (1) zu dem Rückgewinnungstank (3) zu entfernen und zurückzugewinnen;
ein Niederdrucktank (5) vorgesehen ist, um die Overspray-Farbe (2) durch eine Farbpumpe (4) aus dem Rückgewinnungstank (3) aufzunehmen;
**dadurch gekennzeichnet, dass**
ein Stickstoffgenerator (7) zum Zuführen von Stickstoffgas zu dem Niederdrucktank (5) vorgesehen ist, um eine Lackreaktion auf Wasserbasis mit Luftsauerstoff zu verhindern;
wobei das Stickstoffgas vom Stickstoffgenerator (7) über ein Stickstoffströmungsventil (10) in den Niederdrucktank (5) übertragen wird;
ein Auslassventil (8) zum Ausgleich des Druckniveaus im Niederdrucktank (5) vorgesehen ist;
eine Membran in dem Auslassventil (8) vorgesehen ist, um zu ermöglichen, dass sich Sauerstoffgas schneller als Stickstoffgas aus dem Niederdrucktank (5) bewegt; und wodurch der Stickstoff im Niederdrucktank (5) angereichert wird, um die Rückgewinnungsfarbe (2) durch Zugabe von Additiven und Filtern recyclingfähig zu machen.

2. System nach Anspruch 1, worin das System ferner einen Drucksensor (6) zum Steuern des Druckniveaus des Auslassventils (8) und ein Stickstofföffnungsventil (9) umfasst, welches im Niederdrucktank (5) vorgesehen ist.

3. System nach Anspruch 1, worin das im Niederdrucktank (5) vorhandene Stickstoffgas die Reaktion zwischen Luftsauerstoff und dem wasserbasierten Lack verhindert.

4. System nach Anspruch 1, worin die Farbpumpe (4) Rückgewinnungslack (2) aus dem Rückgewinnungstank (3) in den Niederdrucktank (5) mit einem vorbestimmten Druckniveau überträgt; und worin die Farbpumpe (4) den Rückgewinnungslack (2) vom Boden des Rückgewinnungstanks (3) überträgt.

5. System nach Anspruch 1, worin der Stickstoffgenerator (7) beginnt, Stickstoffgas in den Niederdrucktank (5) zu übertragen, wenn der Rückgewinnungslack (2) begonnen wird, den Rückgewinnungslack (2) in den Niederdrucktank (5) zu pumpen; und worin der Stickstoffgenerator (7) die Zufuhr von Stickstoffgas einstellt, wenn ein vorgegebenes Druckniveau erreicht wird.

6. System nach Anspruch 1, wobei das Auslassventil (8) geöffnet wird, um das Druckniveau auszugleichen, wenn das Stickstoffgas in den Niederdrucktank (5) übertragen wird.

7. System nach Anspruch 1, worin die Membran aus dünnhaarigen Hohlrohren aus Polymermaterial besteht.

8. System nach Anspruch 1, worin der Druck in dem Niederdrucktank (5) Luft, die innerhalb des Niederdrucktanks (5) vorhanden ist, dazu bringt, sich nach außen zu bewegen; und worin die Luft, die innerhalb des Niederdrucktanks (5) vorhanden ist, Sauerstoff und Stickstoff beinhaltet.

9. System nach Anspruch 1, worin die Membran das Sauerstoffgas schneller durch die Membran strömen lässt als das Stickstoffgas.

10. Verfahren zum Recycling und zur Wiederverwendung von Lacken auf Wasserbasis, umfassend die Schritte von,
Sammeln von Overspray-Farbe (2) in einem Auffangbehälter (3);
Übertragen von Rückgewinnungslack (2) auf einen Niederdrucktank (5), um eine Reaktion mit Luftsauerstoff zu verhindern;
Übertragen von Stickstoffgas in den Niederdrucktank (5), um es mit der Rückgewinnungsfarbe (2) zu vermischen;
so dass sich das im Niederdrucktank (5) vorhandene Sauerstoffgas zwangsweise durch eine Membran in die Atmosphäre bewegt;
Erhöhen der Stickstoffgaskonzentration durch Übertragen von Sauerstoffgas in die Atmosphäre und Leiten von Stickstoffgas in den Niederdrucktank (5);
Aufrechterhalten eines vorbestimmten Druckniveaus im Inneren des Niederdrucktanks (5);
Halten von Stickstoffgas auf einem höheren Konzentrationsniveau kontinuierlich innerhalb des Niederdrucktanks (5), um eine Reaktion von Rückgewinnungslack (2) mit Sauerstoff zu verhindern; und
Recycling der Rückgewinnungsfarbe (2) durch Zugabe von Additiven und durch Filtration.

## Revendications

1. Un système de recyclage et de réutilisation de peinture à base d'eau utilisant de l'azote comprend de l'azote,
un réservoir de récupération (3) est prévu pour récupérer la peinture de survaporisation (2) d'un système de récupération à bande plate (100) ;
dans lequel le système de récupération à bande plate (100) est configuré pour enlever et récupérer la peinture de pulvérisation excédentaire (2) d'une bande transporteuse (1) vers le réservoir de récupération (3) ;
un réservoir basse pression (5) est prévu pour recueillir la peinture de survaporisation (2) à travers une pompe de peinture (4) du réservoir de récupération (3) ;
**caractérisé en ce que**
un générateur d'azote (7) est prévu pour fournir de l'azote gazeux au réservoir basse pression (5) afin d'empêcher une réaction de peinture à base d'eau avec l'oxygène atmosphérique ;
dans laquelle l'azote gazeux est transféré du générateur d'azote (7) au réservoir basse pression (5) par l'intermédiaire d'une soupape d'écoulement d'azote (10) ;
une soupape de sortie (8) est prévue pour équilibrer le niveau de pression dans le réservoir basse pression (5) ;
une membrane est prévue dans la soupape de sortie (8) pour permettre au gaz oxygène de se déplacer plus rapidement que le gaz azote du réservoir basse pression (5) ; et
enrichissant ainsi l'azote à l'intérieur du réservoir basse pression (5) pour rendre la peinture de récupération (2) prête pour le recyclage en ajoutant des additifs et en filtrant.

2. Système selon la revendication 1, dans lequel le système comprend en outre un capteur de pression (6) pour commander le niveau de pression de la soupape de sortie (8) et une soupape d'ouverture d'azote (9) qui est prévue dans le réservoir basse pression (5).

3. Système selon la revendication 1, dans lequel l'azote gazeux présent dans le réservoir basse pression (5) empêche la réaction entre l'oxygène atmosphérique et la peinture à base d'eau.

4. Système selon la revendication 1, dans lequel la pompe de peinture (4) transfère la peinture de récupération (2) du réservoir de récupération (3) au réservoir basse pression (5) avec un niveau de pression prédéterminé ; et dans lequel la pompe de peinture (4) transfère la peinture de récupération (2) du fond du réservoir de récupération (3).

5. Système selon la revendication 1, dans lequel le générateur d'azote (7) commence à transférer de l'azote gazeux vers le réservoir basse pression (5) lorsque la peinture de récupération (2) commence à pomper la peinture de récupération (2) vers le réservoir basse pression (5) ; et dans lequel le générateur d'azote (7) cesse de fournir l'azote gazeux lorsqu'un niveau de pression prédéterminé est obtenu.

6. Système selon la revendication 1, dans lequel la soupape de sortie (8) est ouverte pour équilibrer le niveau de pression lorsque l'azote gazeux est transféré dans le réservoir basse pression (5).

7. Système selon la revendication 1, dans lequel la membrane est constituée de tubes creux à poils fins en matériau polymère.

8. Système selon la revendication 1, dans lequel la pression dans le réservoir basse pression (5) fait que l'air qui est présent à l'intérieur du réservoir basse pression (5) se déplace vers l'extérieur ; et dans lequel l'air qui est présent à l'intérieur du réservoir basse pression (5) inclut l'oxygène et l'azote.

9. Système selon la revendication 1, dans lequel la membrane permet au gaz oxygène de passer à travers la membrane plus rapidement que le gaz azote.

10. Procédé de recyclage et de réutilisation d'une peinture à base d'eau comprenant les étapes consistant à,
la collecte de la peinture de survaporisation (2) dans un réservoir de récupération (3) ;
le transfert de la peinture de récupération (2) dans un réservoir basse pression (5) pour éviter une réaction avec l'oxygène atmosphérique ;
transfert de l'azote gazeux dans le réservoir basse pression (5) pour le mélanger avec la peinture de récupération (2) ;
permettant à l'oxygène gazeux présent à l'intérieur du réservoir basse pression (5) de s'échapper dans l'atmosphère de force à travers une membrane ;
l'augmentation de la concentration d'azote gazeux en transférant de l'oxygène gazeux dans l'atmosphère et en faisant passer de l'azote gazeux à l'intérieur du réservoir basse pression (5) ;
le maintien d'un niveau de pression prédéterminé à l'intérieur du réservoir basse pression (5) ;
maintenir l'azote à un niveau de concentration plus élevé de façon continue à l'intérieur du réservoir basse pression (5) pour empêcher la réaction de la peinture de récupération (2) avec l'oxygène ; et
le recyclage de la peinture de récupération (2) par adjonction d'additifs et par filtration.
